# EUROPEAN PATENT APPLICATION

(11) **EP 4 822 051 A1**
(43) Date of publication of application: **14.10.2026**
(21) Application number: 24912511.3
(22) Date of filing: 17.12.2024
(51) Int. Cl.: C22C 38/00, C21D 8/02, C22C 38/34, C22C 38/54

(54) **HIGH-PRESSURE TANK**

(30) Priority: 27.12.2023 JP 2023220518
(71) Applicant: JFE Steel Corporation, Tokyo 100-0011 (JP)
(72) Inventor: OKANO, Hiroshi, Tokyo 100-0011 (JP); YUSSALLA, Vanadia, Irisca, Tokyo 100-0011 (JP); INOUE, Naho, Tokyo 100-0011 (JP); EGUCHI, Kenichiro, Tokyo 100-0011 (JP); TAKANO, Toshio, Tokyo 101-0064 (JP)
(74) Representative: Haseltine Lake Kempner LLP
(86) International application number: PCT/JP2024/044544
(87) International publication number: WO 2025/142622

(57) **Abstract**

A high-pressure tank is provided that ensures sufficient storage capacity for hydrogen-containing gas while reducing weight. The high-pressure tank includes a tank body configured to store therein a mixed gas containing natural gas and hydrogen, the mixed gas containing more than 2% hydrogen by volume. The tank body includes a cylindrical portion extending in a first direction and dome portions respectively provided at both ends of the cylindrical portion in the first direction. A steel material constituting the tank body has a tensile strength of 850 MPa or more, a structure in which tempered martensite accounts for 95% or more in terms of area fraction, and carbides having a size of 100 nm or less dispersed in a metallic microstructure as precipitates, and has strength of 11,250 cycles or more in crack propagation analysis.

## Description

### Technical Field

The present disclosure relates to a high-pressure tank for storing high-pressure hydrogen.

### Background Art

The Sustainable Development Goals (SDGs) have been proposed as countermeasures against global warming. As part of this, hydrogen and e-methane (synthetic methane, or methane synthesized from recovered CO₂ and hydrogen produced from renewable energy, etc.) are expected as alternative energies to fossil fuels.

A hydrogen engine that burns hydrogen as fuel is environmentally friendly in that it emits no carbon dioxide (CO₂). Such a hydrogen engine is realizable by improving a structure based on a conventional gasoline engine. However, while hydrogen gas used as fuel has advantages such as high flammability and high combustion speed, it can ignite at unintended timings. Consequently, hydrogen engines are prone to damage and have durability issues. The dominant factors behind this unstable ignition phenomenon of hydrogen gas have not yet been elucidated.

Methane gas (CH₄) is also used as an environmentally friendly fuel, and natural gas (CNG) vehicles are well known. However, methane gas has a slow ignition speed and is prone to generating unburned methane, which has made the generation of NOx a challenge. Although lean burn technology for methane was developed as a countermeasure against NOx, it faces the challenge that the lean burn range of methane is narrow.

To resolve the challenges associated with hydrogen gas and methane gas described above, attention has been focused on lean burn technology for a mixed gas (HCNG) obtained by mixing hydrogen into methane. Development and demonstration tests of HCNG lean burn technology were conducted in the 2000s; however, development stagnated due to insufficient hydrogen supply infrastructure, high hydrogen gas prices, and an insufficient NOx reduction effect. In recent years, however, efforts to develop operation technologies for hydrogen and hydrogen compounds have resumed.

Recent studies show that adding hydrogen gas to methane gas widens the lean burn range of methane, improves fuel efficiency, and lowers the combustion temperature to reduce NOx. Furthermore, findings show that this lean burn technology is also applicable to bi-fuel engines using gasoline and natural gas.

Mounting hydrogen gas or natural gas as fuel on a vehicle requires a tank for storing the gas at a high pressure. Known tanks for storing such high-pressure gas include: Type 1 tanks consisting of a metal container; Type 2 tanks in which a hoop layer made of fiber-reinforced plastic (FRP) is formed only on a cylindrical portion of a metal container; Type 3 tanks in which an FRP helical layer is formed over the entire metal container and an FRP hoop layer is formed on the cylindrical portion; and Type 4 tanks in which an FRP helical layer is formed over an entire resin container and an FRP hoop layer is formed on the cylindrical portion (see, for example, Patent Literature 1).

### Citation List

### Patent Literature

Patent Literature 1: Japanese Unexamined Patent Application Publication No. 2017-048912

### Summary of Invention

### Technical Problem

Among the high-pressure tanks disclosed in Patent Literature 1, tanks other than the Type 1 tank (metal container) are configured by winding fiber-reinforced plastic (FRP) around a metal container. This complicates the manufacturing process and increases manufacturing costs. In particular, when the gas stored in the high-pressure tank contains hydrogen, the tank is manufactured by winding resin-impregnated carbon fiber reinforced plastic (CFRP) around an aluminum alloy liner that is free from hydrogen embrittlement. The liner of such a high-pressure tank includes a cylindrical portion and dome portions provided at both ends of the cylindrical portion. Generally, in a thin-walled tank with such a structure, the stress applied in the circumferential direction of the cylindrical portion under internal pressure is known to be twice the magnitude of the stress in the axial direction. Although high-pressure tanks typically have a large wall thickness that results in a stress distribution in the thickness direction, the aforementioned difference in stress between the circumferential and axial directions fundamentally occurs in the liner. Consequently, to provide strength corresponding to this stress ratio, Type 2 to 4 high-pressure tanks require adjustment of the FRP fiber orientation between the dome portions and the cylindrical portion. This necessity increases the costs associated with the FRP winding process in Type 2 to 4 high-pressure tanks.

On the other hand, the Type 1 high-pressure tank (metal container) disclosed in Patent Literature 1 can achieve a light weight and reduced costs for natural gas-only engines, as the hydrogen content in the stored gas is 2% or less, which minimizes the influence of hydrogen embrittlement. However, as described above, a Type 1 high-pressure tank for storing HCNG (natural gas supplemented with hydrogen gas) typically uses a steel container, which faces the challenge of reduced durability due to hydrogen embrittlement. Although the storage pressure in a Type 1 high-pressure tank can be lowered to suppress the influence of hydrogen embrittlement, this prevents the storage of a gas amount sufficient for an automobile. Conversely, if the storage pressure is increased to enhance the gas storage capacity, the wall thickness of the high-pressure tank must be increased to reduce the generated stress and suppress hydrogen embrittlement. In this case, the high-pressure tank increases in both weight and volume, making it unsuitable for vehicle mounting.

The present disclosure aims to solve the above problems and provides a high-pressure tank that ensures a sufficient storage capacity for hydrogen-containing gas while maintaining a reduced weight.

### Solution to Problem

A high-pressure tank comprising: a tank body for storing therein a mixed gas containing natural gas and hydrogen, the mixed gas containing more than 2% hydrogen by volume, the tank body comprising: a cylindrical portion extending in a first direction; and dome portions respectively provided at both ends of the cylindrical portion in the first direction, wherein a steel material constituting the tank body has: a tensile strength (TS) of 850 MPa or more; a structure in which tempered martensite accounts for 95% or more in terms of area fraction, and carbides having a size of 100 nm or less are dispersed in a metallic microstructure as precipitates; and strength of 11,250 cycles or more in crack propagation analysis.

### Advantageous Effects of Invention

In the above high-pressure tank, precipitates of 100 nm or less trap hydrogen entering a structure of a steel material constituting the tank body and moving within crystal grains. This trapping suppresses accumulation of the hydrogen at grain boundaries of the structure. The suppressed accumulation prevents intergranular fracture of the structure. The steel material thus ensures sufficient fatigue strength even when storing a mixed fuel of hydrogen and natural gas.

### Brief Description of Drawings

[FIG. 1] A cross-sectional view showing a high-pressure tank 100 according to a first embodiment.
[FIG. 2] A graph schematically showing an influence of hydrogen embrittlement on a steel material.
[FIG. 3] An explanatory diagram schematically showing an influence of hydrogen on a known material and a new material.
[FIG. 4] A graph schematically showing a relationship between a crack propagation rate and a stress generated in a steel material constituting a tank body 10 according to the first embodiment and a known steel material.

### Description of Embodiments

Embodiments of high-pressure tanks of the present disclosure will now be described in detail with reference to the drawings. The embodiments described below are preferred embodiments of the present disclosure and include various technically preferred limitations. However, the scope of the present disclosure is not limited to these embodiments unless otherwise specified.

### Embodiment 1

### <High-Pressure Tank 100>

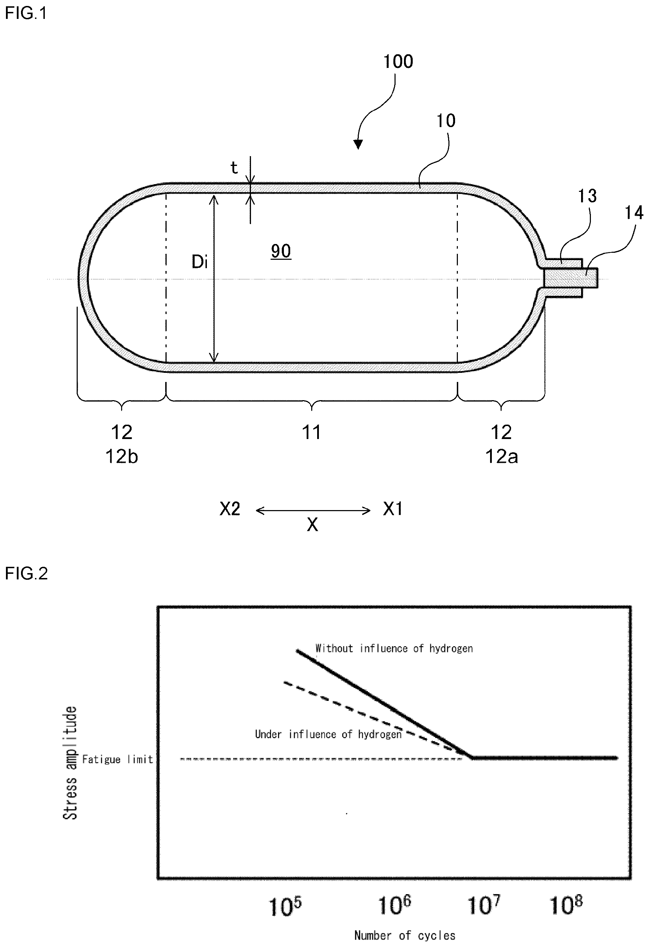

FIG. 1 is a cross-sectional view showing a high-pressure tank 100 according to a first embodiment. FIG. 1 schematically shows the structure of the high-pressure tank 100.

The high-pressure tank 100 is mounted on, for example, a vehicle to store fuel for driving an engine. The fuel is a mixed gas containing hydrogen, specifically a mixed gas of hydrogen and natural gas (HCNG). The HCNG includes, for example, 20% hydrogen gas and the balance of natural gas.

The high-pressure tank 100 includes a mouthpiece 13 at one end. A supply device 14, such as a valve, is attached to the mouthpiece 13 to supply the stored mixed gas to the engine. The supply device 14 delivers the mixed gas to the engine at a predetermined pressure. The high-pressure tank 100 stores a sufficient amount of the mixed gas to ensure a practically required cruising range for the vehicle.

The high-pressure tank 100 is not limited to vehicle applications. It is applicable to various driving bodies (e.g., industrial machines and generators) driven by a mixed gas containing hydrogen as fuel. This structure allows the high-pressure tank 100 to be used for a wide range of applications.

The mixed gas stored in the high-pressure tank 100 according to the first embodiment has a higher ratio of hydrogen gas than at least conventional CNG and contains more than 2% hydrogen by volume. In other examples, the mixed gas may contain more than 4%, 10%, 20%, 30%, 40%, 50%, 60%, 70%, 80%, or 90% hydrogen by volume, or may contain hydrogen by volume exceeding any numerical value between these exemplified values.

### <Structure of Tank Body 10>

The tank body 10 includes a cylindrical portion 11 and dome portions 12 at both ends thereof. The cylindrical portion 11 is a cylindrical body with an inner diameter Di and is formed of steel material having a wall thickness t. The dome portions 12 are hollow hemispherical portions connected to both ends of the cylindrical portion 11 and are formed of the same steel material with the same wall thickness t.

Although shown as hemispherical in FIG. 1, the dome portions 12 may have any dome shape combining curved surfaces, such as spherical surfaces, and flat surfaces. Furthermore, the wall thickness t of the dome portions 12 may be non-uniform; for example, it may be increased in areas of stress concentration, such as around a mouthpiece 13.

The mouthpiece 13 is provided in at least one of the dome portions 12 at both ends. The mouthpiece 13 delivers the mixed gas inside to the outside of the tank body 10. In FIG. 1, the mouthpiece 13 is provided in the dome portion 12a on the X1 side. The mouthpiece 13 may be provided not only in the dome portion 12a but also in the dome portion 12b at the other end.

The mouthpiece 13 is a part to which the supply device 14 is attached. The mouthpiece 13 may have internal threads or a sealing structure to prevent the mixed gas inside from leaking.

In some embodiments, the steel material of the tank body 10 has an initial defect size of 0.5 mm or less in depth and 1.5 mm or less in length, as measured by ultrasonic testing in a completed state. The tank body 10 may use the steel material whose inner surface in contact with the mixed gas is polished.

### <Required Strength of High-Pressure Tank 100>

The high-pressure tank 100 encloses the mixed gas containing hydrogen in the internal space 90. The rated maximum pressure of the mixed gas is at least 20 MPa. The rated maximum pressure may be, for example, 25 MPa, 35 MPa, or 70 MPa, or an arbitrary pressure between 20 MPa and 70 MPa. The mixed gas in the high-pressure tank 100 decreases as the vehicle travels, which gradually lowers the internal pressure to, for example, about 0.2 MPa.

The lowered pressure leads to refilling the high-pressure tank 100 with the mixed gas, returning the internal pressure to a high-pressure state. The tank body 10 is repeatedly subjected to high-pressure and low-pressure states (e.g., 0.2 MPa to 20 MPa). The high-pressure state generates high stress, while the low-pressure state generates low stress. That is, the tank body 10 repeatedly undergoes stress and must withstand the stress amplitude.

Generally, when stress amplitude is equal to or less than the fatigue limit σ_{w} a material withstands a substantially infinite number of repetitions (about $10^7$ cycles, although some materials have no clear fatigue limit). That is, in the high-pressure tank 100 described above, if the stress $¥sigma$ generated in the tank body 10 under high pressure of at least 20 MPa is equal to or less than the fatigue limit σ_{w}, the tank body 10 avoids fatigue fracture. However, the fatigue limit σ_{w} is approximately half the tensile strength of the material. Designing the high-pressure tank 100 based on the fatigue limit σ_{w} while considering a safety factor involves increasing the wall thickness t of the tank body 10 or lowering the maximum value of the internal pressure.

FIG. 2 is a graph schematically showing the influence of hydrogen embrittlement on the steel material. Specifically, FIG. 2 shows the relationship between stress applied to the steel material and the number of cycles. A hydrogen environment reduces the strength of the steel material against repeated stress amplitude. While the steel material fractures when repeated stress is applied, it avoids fracture even after 10^6 to 10^7 cycles or more by lowering the stress. The stress at this time is referred to as the fatigue limit. Under the influence of hydrogen, the steel material fractures at lower stress in a low-cycle region (a region with a small number of cycles) than when free from the influence of hydrogen.

The high-pressure tank 100 is affected by hydrogen embrittlement because it encloses the mixed gas containing hydrogen. The high-pressure tank 100 according to the first embodiment uses the adjusted steel material in consideration of the hydrogen gas containment; thus, it can store the high-pressure mixed gas while suppressing the influence of hydrogen embrittlement. Details of the characteristics of the steel material used in the high-pressure tank 100 will be described later. In contrast, conventional high-pressure tanks use general steel materials. When filled with a mixed gas containing hydrogen, these tanks are affected by hydrogen embrittlement, reducing the fatigue strength of the steel and significantly lowering its resistance to repeated stress. For this reason, in high-pressure tanks using general steel materials, it is necessary to increase the wall thickness t or lower the internal pressure to reduce generated stress. However, conventional high-pressure tanks are used for CNG vehicles, and since the amount of hydrogen gas contained in the gas filled inside is suppressed to 2% or less, it was not necessary to consider the influence of hydrogen embrittlement.

**[Table 1]**

| | Conventional Examp I e | Comparative Example1 | Comparati ve Example? | Comparative Examole3 | Comparat ive Example4 | Inventi ve Example 1 | Inventive Example 2 | Inventi ve Example 3 | Inventive Example 4 |
|---|---|---|---|---|---|---|---|---|---|
| Stored fuel | CNG | HCNG | ← | ← | ← | ← | ← | ← | ← |
| Inner diameter of tank Di [mm] | 303.2 | 303.2 | 290 | 296 | 221.8 | 300 | 298 | 296 | 226.2 |
| Outer diameter of tank Do [mm] | 316 | - | - | - | 242 | 316 | - | - | 242 |
| Wall thickness t [mm] | 6.4 | 6.4 | 13 | 10 | 10.1 | 8 | 9 | 10 | 7.9 |
| Length of tank L [mm] | 921 | - | - | - | 1595 | 921 | - | - | 1525 |
| Weight of tank body [kgf] | 51 | 51 | 113 | 80 | 113 | 63 | 71 | 80 | 86 |
| Tank capacity [L] | 57 | 57 | 51 | 53 | 57 | 56 | 55 | 53 | 56 |
| Material of high-pressure tank body | Krown material | - | ← | - | - | New material | ← | ← | ← |
| Maximum pressure of nigh-pressure tank [MPa] | 25 | - | ← | ← | ← | ← | ← | ← | - |
| Hoop stress *σ* generated in high-pressure tank [MPa] | 592 | 592 | 279 | 370 | 275 | 469 | 414 | 370 | 358 |
| Life | OK | NG | OK | NG | OK | OK | OK | OK | OK |

Table 1 summarizes the hoop stress sigma and the service life for the conventional, comparative, and inventive examples of the high-pressure tank. In each example shown in Table 1, the structure of the tank body is the same as that of the tank body 10 according to the first embodiment shown in FIG. 1 (although detailed dimensions are set differently), and the gas is enclosed at the same pressure. However, these examples differ in the wall thickness t and the material used for the tank body 10. Consequently, the conventional, comparative, and inventive examples in Table 1 result in different generated hoop stresses sigma and different outcomes regarding whether the service life is sufficient for use.

The conventional example shown in the leftmost column of Table 1 stores CNG (natural gas) as fuel, where the hydrogen content in the gas is limited to 2% or less. The high-pressure tank in the conventional example is made of a conventional material, such as quenched and tempered SCM435 (chromium-molybdenum steel). This conventional material has a tensile strength (TS) of, for example, 953 MPa, but lacks the specific characteristics of the steel material used in the high-pressure tank 100 according to the first embodiment. The conventional material SCM435 contains 0.15 to 0.30 mass% molybdenum (Mo). Since the fuel stored in the conventional high-pressure tank contains only a minute amount of hydrogen, the tank is not affected by hydrogen embrittlement. Consequently, as shown in Table 1, the tank has sufficient durability and ensures an adequate service life as a vehicle-mounted CNG high-pressure tank, even with a calculated hoop stress sigma of 592 MPa.

The hoop stress sigma (σ) generated in the high-pressure tank is calculated by the following formula (Equation 1): $σ = Di ⋅ p / \left(2t\right)$ (Equation 1) where:
Di is the inner diameter of the container [mm],
p is the internal pressure of the gas [MPa], and
t is the wall thickness of the cylindrical portion 11 of the tank body 10.

The service life of each high-pressure tank in Table 1 was determined through fatigue crack propagation analysis. The fatigue crack propagation analysis complies with KHKS 0220 (2020). The service life is evaluated as achieved (indicated as "OK" in Table 1) or not achieved (indicated as "NG" in Table 1) based on whether fracture occurs during 11,250 cycles of stress amplitude. The criterion of 11,250 cycles is set considering the number of fuel refilling cycles expected over the mileage limit of a vehicle. The service life of the high-pressure tank 100 according to the first embodiment may be 11,250 cycles or more, and for example, may be 12,000, 15,000, 20,000, or 25,000 cycles or more, including any value between these examples. However, a longer service life of the high-pressure tank 100 leads to an increased wall thickness t of the tank body 10 and a resulting increase in weight. Such a weight increase may reduce fuel efficiency when the high-pressure tank 100 is mounted on a vehicle; therefore, the service life of the high-pressure tank 100 may be set to 50,000 cycles or less.

As described above, the high-pressure tank in the conventional example is made of a conventional material. However, because it is used for storing CNG and the hydrogen content in the filled gas is limited to 2% or less, the tank is not affected by hydrogen embrittlement and ensures the service life required for a vehicle-mounted fuel container. Specifically, the service life of the conventional example was 15,784 cycles, which satisfies the determination criterion of 11,250 cycles.

### <Comparative Examples 1 and 3 in Table 1>

Comparative Example 1, shown in the second column from the left, and Comparative Example 3, shown in the fourth column of Table 1, store HCNG (a mixed gas of natural gas and hydrogen) as fuel, where the hydrogen content in the gas is 20%. The high-pressure tanks in Comparative Examples 1 and 3 are made of the conventional material, such as quenched and tempered SCM435 (chromium-molybdenum steel), similar to the conventional example. This conventional material has a tensile strength (TS) of 953 MPa but lacks the specific characteristics of the steel material used in the high-pressure tank 100 according to the first embodiment. In these comparative examples, the hydrogen contained in the stored fuel causes hydrogen embrittlement in the steel material, thereby reducing the service life. The high-pressure tank in Comparative Example 1 has a wall thickness t = 6.4 mm and a calculated hoop stress sigma = 592 MPa. However, Comparative Example 1 had a service life of about 1,200 to 1,300 cycles, failing to ensure the service life required for a vehicle-mounted high-pressure tank. Additionally, as shown in Comparative Example 3, the conventional material could not ensure the service life even with a wall thickness t = 10 mm.

### <Comparative Example 2 in Table 1>

Comparative Example 2, shown in the third column from the left in Table 1, also stores HCNG as fuel, similar to Comparative Example 1. The high-pressure tank in Comparative Example 2 is made of the conventional material, such as quenched and tempered SCM435 (chromium-molybdenum steel), similar to the conventional example and Comparative Examples 1 and 3. This conventional material has a tensile strength (TS) of 953 MPa but lacks the specific characteristics of the steel material used in the high-pressure tank 100 according to the first embodiment. In Comparative Example 2, the hydrogen contained in the stored fuel causes hydrogen embrittlement in the steel material, thereby reducing the service life. However, Comparative Example 2 has a wall thickness t of 13 mm, which keeps the calculated hoop stress sigma as low as 279 MPa. Consequently, the high-pressure tank in Comparative Example 2 achieved a service life exceeding the determination criterion of 11,250 cycles despite the influence of hydrogen embrittlement, thereby ensuring the service life required for a vehicle-mounted HCNG high-pressure tank.

However, although the high-pressure tank in Comparative Example 2 achieves the service life criterion, it has a large wall thickness t and a weight of 113 kgf, which is twice that of the conventional example. Furthermore, this high-pressure tank stores less fuel than the high-pressure tanks in the conventional example and Comparative Examples 1 and 3. When the high-pressure tank is used as a vehicle-mounted fuel tank, an increase in the weight of the tank body 10 leads to an increase in the vehicle weight. Such a weight increase must be suppressed as much as possible. Mounting a heavy high-pressure tank 100, such as that in Comparative Example 2, on a vehicle generally involves measures such as reducing the seating capacity. For this reason, high-pressure tanks currently used for storing vehicle-mounted CNG do not have such large wall thicknesses. Applying conventional materials to high-pressure tanks for storing vehicle-mounted HCNG would require a wall thickness t at least comparable to that of Comparative Example 2.

### <Comparative Example 4 in Table 1>

Comparative Example 4, shown in the fifth column from the left in Table 1, reduces the generated stress by decreasing the outer diameter Do of the tank, which allows for a reduction in the wall thickness. Specifically, compared to Comparative Example 2, the wall thickness in Comparative Example 4 can be reduced by approximately 3 mm. On the other hand, reducing only the outer diameter Do lowers the tank capacity; therefore, maintaining the required capacity necessitates increasing the tank length. In Comparative Example 4, to ensure a capacity of 57 liters (which is comparable to the conventional example and Comparative Example 1 in Table 1), the tank length must be 1595 mm, resulting in an estimated weight of 113 kg. Therefore, merely reducing the outer diameter Do of the high-pressure tank for storing HCNG satisfies the service life requirement but fails to achieve weight reduction.

### <Inventive Examples in Table 1>

Inventive Example 1, shown in the sixth column from the left in Table 1, also stores HCNG as fuel, similar to Comparative Examples 1 to 4. Unlike the conventional example and Comparative Examples 1 to 4, the material constituting the high-pressure tank in Inventive Example 1 is the new steel material used for the tank body 10 according to the first embodiment. This new steel material corresponds to the steel material described later (for example, the steel materials indicated as Inventive Examples among steel material Nos. 1 to 18 in Table 3). Since the high-pressure tank in Inventive Example 1 uses this new material, the influence of hydrogen in the stored fuel is suppressed, and hydrogen embrittlement of the steel material is mitigated, resulting in a longer service life than high-pressure tanks using conventional materials. For conventional materials, the required service life could not be ensured even with a wall thickness t of 10 mm (Comparative Example 3); ensuring the service life required either increasing the wall thickness t to 13 mm (Comparative Example 2) or reducing the outer diameter Do to 242 mm with a wall thickness t of 10.1 mm (Comparative Example 4). In contrast, the high-pressure tank in Inventive Example 1 has a wall thickness t of 8 mm and a calculated hoop stress sigma of 445 MPa, yet its service life exceeds the determination criterion of 11,250 cycles. This demonstrates that the service life for a vehicle-mounted HCNG high-pressure tank is ensured even with a smaller wall thickness than that of conventional materials. Inventive Examples 2, 3, and 4 are also high-pressure tanks using the new material and, like Inventive Example 1, successfully ensured the required service life. Furthermore, although Inventive Example 4 has an elongated tank, its reduced outer diameter Do allows the mounting orientation of the tank to be changed from horizontal to vertical, providing the advantage of expanding the degree of freedom in mounting design.

As described above, Inventive Example 1 ensures strength and durability even when storing HCNG. Although its weight is higher than that of the conventional example, it achieves a weight reduction of approximately 40 kgf compared to Comparative Example 2, which uses the conventional material. That is, the high-pressure tank 100 using the new material, as in Inventive Example 1, satisfies the requirements for practical use as a vehicle-mounted HCNG high-pressure tank.

### <Steel Material Used for Tank Body 10 According to First Embodiment>

As described above, applying the high-pressure tank 100 according to the first embodiment as a vehicle-mounted high-pressure tank for storing HCNG ensures a sufficient service life. This durability is primarily due to the characteristics of the steel material constituting the tank body 10. The following describes these characteristics and the mechanism for suppressing the influence of hydrogen embrittlement.

In the tank body 10 according to the first embodiment, carbides are dispersed within the microstructure. These carbides trap hydrogen that has entered the microstructure within the grains, thereby suppressing the influence of hydrogen embrittlement. In particular, by including a predetermined amount of molybdenum in the steel composition, carbides present in the microstructure are optimally dispersed as precipitates with a target size. Consequently, hydrogen entering the microstructure is trapped by molybdenum-containing precipitates within the grains, suppressing hydrogen embrittlement. Including the predetermined amount of molybdenum allows these precipitates to be dispersed throughout the microstructure to trap hydrogen. In contrast, if a steel material with inappropriately arranged carbides-as in the conventional and comparative examples-is used for the tank body 10, hydrogen accumulates at the grain boundaries of the microstructure, leading to intergranular fracture. Effective carbides for hydrogen trapping in the microstructure include TiC (titanium carbide), VC (vanadium carbide), and NbC (niobium carbide), in addition to Mo2C (molybdenum carbide). Carbides precipitated in the microstructure are effective as hydrogen traps if they have a size of 100 nm or less, such as 50 nm or less.

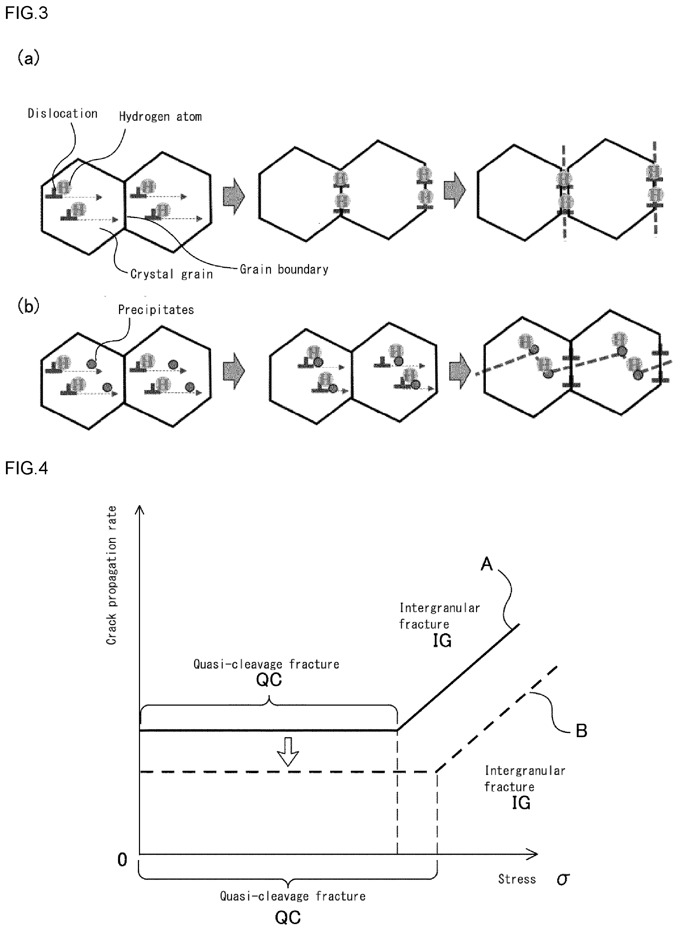

FIG. 3 is an explanatory diagram schematically showing the influence of hydrogen on a conventional material and the new material. Hydrogen atoms entering the microstructure of the steel material of the tank body 10 move within the microstructure together with dislocations in the crystals. The microstructure of the steel material includes fine crystal grains; when high stress is generated, fracture easily occurs at the boundaries between these crystal grains (grain boundaries). Furthermore, the accumulation of hydrogen atoms at the grain boundaries causes intergranular fracture due to, for example, a decrease in interatomic cohesive force, thereby reducing the fatigue strength of the steel.

FIG. 3(a) is a diagram illustrating the movement of hydrogen within crystal grains in a conventional material where carbides are not appropriately arranged. In the conventional material, hydrogen atoms move within the crystal grains together with dislocations and accumulate at the grain boundaries. This accumulation makes the grain boundaries susceptible to the action of the hydrogen atoms, leading to easy fracture.

FIG. 3(b) is a diagram illustrating the movement of hydrogen within crystal grains in the new material where carbides are appropriately arranged. In the new material, although hydrogen atoms move within the crystal grains together with dislocations, the carbides arranged within the grains trap the hydrogen atoms and suppress their accumulation at the grain boundaries. Consequently, in the new material, the grain boundaries are less susceptible to the action of the hydrogen atoms, and intergranular fracture is suppressed compared to the conventional material.

FIG. 4 is a graph schematically showing the relationship between stress and crack propagation rate for the steel material of the tank body 10 and a conventional steel material. In the case of a high-pressure tank using a conventional material, as indicated by the solid line A in FIG. 4, quasi-cleavage (QC) fracture occurs primarily within the crystal grains up to a certain stress range (the horizontal portion of the solid line A), whereas intergranular (IG) fracture dominates at or above a certain stress (the inclined portion of the solid line A). This behavior is similar for the steel material constituting the tank body 10 according to the first embodiment; however, as indicated by the dashed line B in FIG. 4, the steel material of the first embodiment exhibits a lower overall crack propagation rate because carbides are arranged within the crystal grains. Furthermore, in the steel material of the first embodiment, hydrogen atoms are trapped within the crystal grains, making intergranular fracture less likely to occur. This expands the region where quasi-cleavage (QC) fracture is the dominant fracture mode and increases the stress level at which intergranular fracture becomes dominant.

### Steel Structure

The steel material used for the tank body 10 has a microstructure primarily composed of tempered martensite and contains molybdenum-containing precipitates. These molybdenum-containing precipitates include those with a diameter of 50 nm or less. The steel material is, for example, molybdenum steel or martensitic stainless steel. While some conventional high-pressure tanks for storing hydrogen-containing mixed gas use austenitic stainless steel to suppress hydrogen embrittlement, the tank body 10 according to the first embodiment suppresses hydrogen embrittlement while primarily using low-alloy steel.

### Main Phase: Tempered Martensite Phase

The steel material for the tank body 10 uses a microstructure primarily composed of martensite to ensure a high tensile strength (TS) of 850 MPa or more. To maintain the ductility and toughness required for a structure, the main phase is tempered martensite obtained by tempering the martensite. The "main phase" herein refers to a single phase representing 100% by area fraction, or a phase representing 95% or more by area fraction that includes a second phase at an area fraction of 5% or less that does not affect characteristics. Examples of the second phase include a bainite phase, a retained austenite phase, pearlite, or a mixed phase thereof.

The microstructure of the tank body 10 can be adjusted by appropriately selecting the heating temperature during quenching and the cooling rate during cooling according to the steel composition. The tensile strength of the material is adjusted to 850 MPa or more, specifically 850 MPa or more and less than 1150 MPa, by adjusting the quenching and tempering conditions. In other embodiments, the tensile strength TS is adjusted to 850 MPa or more and 1000 MPa or less. Since the tank body 10 is filled with a hydrogen-containing mixed gas at high pressure, the steel material may have a high tensile strength TS of 850 MPa or more. However, excessively high tensile strength TS increases brittleness and reduces fatigue strength; therefore, the tensile strength TS should be limited within a certain range. Thus, in the steel material for the tank body 10 according to the first embodiment, the tensile strength TS is at most less than 1150 MPa, such as 850 MPa or more and 1000 MPa or less, to satisfy fatigue strength requirements including the influence of hydrogen.

If the prior austenite grain size index is less than 8.5, the substructure of the formed martensite phase coarsens, resulting in reduced toughness. Therefore, the prior austenite grain size index may be 8.5 or more. The grain size index is a value measured in accordance with JIS G 0551.

The prior austenite grain size index can be adjusted by changing the heating rate, heating temperature, holding temperature, and the number of quenching cycles.

Furthermore, in the steel material for the tank body 10, the concentration of molybdenum-containing precipitates is adjusted within an appropriate range based on their size to enhance hydrogen embrittlement resistance. The molybdenum-containing precipitates were identified using an extraction method by filter filtration, as described in Japanese Unexamined Patent Application Publication No. 2010-127791 and "Analysis of the Generation State of Fine Precipitates in Steel" by Ishida et al. (Tetsu-to-Hagane Vol. 107, No. 08). To measure the Mo concentration in the precipitates, a 10 mm square sample taken from a cross-section perpendicular to the rolling direction of the steel pipe (C cross section) was electrolyzed. The precipitates adhering to the sample surface were placed in a dispersant aqueous solution and subjected to ultrasonic irradiation to extract the precipitates into the solution. The solution was then filtered to classify the precipitates by size. The classified precipitates were dissolved in a solution, and the Mo concentration was analyzed by ICP to calculate the Mo content for each size. The solid solution concentration of Mo in the steel was obtained by ICP analysis of the solution after electrolysis in accordance with Japanese Unexamined Patent Application Publication No. 2009-031269. By subtracting the Mo content in precipitates exceeding 50 nm from the total Mo content in all precipitates, the proportion (mass%) of Mo contained in precipitates with a diameter of 50 nm or less was determined.

Fifty mass% or more of Mo contained in the steel is present in the molybdenum-containing precipitates.

The presence of Mo as precipitates in the steel composition enhances characteristics in a hydrogen environment. This effect is not expected if Mo remains as a solid solution, even if the amount of Mo added to the steel is increased. On the other hand, a larger amount of molybdenum-containing precipitates improves hydrogen trapping ability; the ability significantly improves when 50 mass% or more of Mo in the steel is present as precipitates. In some embodiments, 60 mass% or more of the Mo is present as precipitates. However, the Mo contained in the precipitates may be 50% or less of the Mo contained in the steel.

Fifty mass% or more of the Mo contained in the precipitates is present in precipitates with a diameter of 50 nm or less. Molybdenum-containing precipitates inhibit hydrogen accumulation at grain boundaries by trapping hydrogen in the steel, thereby enhancing grain boundary strength in a hydrogen environment. However, if the diameter exceeds 50 nm, the hydrogen trapping ability decreases. Therefore, it is necessary for a large portion of Mo to be contained in precipitates of 50 nm or less. Specifically, when Mo in fine precipitates of 50 nm or less accounts for 50 mass% or more of the Mo in all precipitates, the hydrogen trapping ability significantly improves. Thus, in the steel material for the tank body 10, Mo in fine precipitates of 50 nm or less may be 50 mass% or more, such as 60 mass% or more, of the total Mo in the precipitates. Since smaller precipitates exhibit better hydrogen trapping ability, the diameter may be 20 nm or less. Note that coarsening of molybdenum-containing precipitates occurs through aggregation and coalescence, which leads to a decrease in the number of fine precipitates.

For the steel material of the tank body 10, in addition to the precipitation of molybdenum-containing precipitates, it is also critical to reduce nitride-based inclusions and oxide-based inclusions that can act as fracture origins in order to enhance hydrogen embrittlement resistance. Management of the refining process of the molten steel is particularly important. In the refining process, pig iron pretreatment is performed for desulfurization and dephosphorization, followed by decarburization and dephosphorization in a converter, and then ladle furnace (LF) refining and RH vacuum degassing are performed in a ladle. During these steps, it is necessary to ensure sufficient processing time for the LF refining and the RH vacuum degassing, and to control the RH circulation rate. Furthermore, when forming a billet (steel pipe material) by a continuous casting method, in order to reduce nitride-based and oxide-based inclusions, an inert gas seal is applied during pouring from the ladle to the tundish, and electromagnetic stirring is performed in the mold to facilitate the floating and separation of inclusions. Note that the refining process for the steel material used in the tank body 10 is not limited to the above; however, appropriate management of the refining process remains essential in any such case.

### [Composition]

First, the composition of the steel material used for the tank body 10 is described. Hereinafter, mass% in the composition is simply expressed as %. C: 0.20 to 0.50% C contributes to increasing the strength of the steel through solid solution strengthening and enhances hardenability, thereby contributing to the formation of a microstructure primarily composed of martensite during quenching. To obtain these effects, the C content must be 0.20% or more. On the other hand, if the C content exceeds 0.50%, cracking occurs during quenching, significantly deteriorating manufacturability. Thus, the C content is limited to the range of 0.20 to 0.50%. In some embodiments, the C content is 0.20 to 0.40%. In other embodiments, the C content is 0.22 to 0.35%.

### Si: 0.05 to 2.00%

Si is added for deoxidation; however, the deoxidation effect is insufficient if the Si content is less than 0.051%. Thus, the Si content is 0.05% or more. On the other hand, if the Si content exceeds 2.00%, the effect saturates. Thus, the Si content is 2.00% or less.

### Mn: 0.30 to 1.5%

Similarly to C, Mn enhances hardenability and contributes to increasing the strength of the steel. These effects require a Mn content of 0.30% or more. On the other hand, Mn segregates in the steel and causes local hardening. An excessive Mn content forms localized hard regions, which adversely affects hydrogen embrittlement resistance. Therefore, the Mn content is limited to 0.30 to 1.5%. In some embodiments, the Mn content is 0.4 to 0.8%, such as 0.5 to 0.8%.

### P: 0.015% or less

P segregates at grain boundaries in the steel structure to cause grain boundary embrittlement and also segregates to harden the steel locally. In the steel material for the tank body 10, P is an inevitable impurity. While it is preferable to remove as much P as possible, up to 0.015% is acceptable. In some embodiments, the P content is 0.008% or less. From the viewpoint of refining costs, the P content is 0.0001% or more in some embodiments.

### S: 0.005% or less

S is an inevitable impurity. In the steel, most S is present as sulfide inclusions that reduce ductility, toughness, and SSC resistance. While it is preferable to remove as much S as possible, up to 0.005% is acceptable. In some embodiments, the S content is 0.003% or less. From the viewpoint of refining costs, the S content is 0.0002% or more in some embodiments.

### Al: 0.005 to 0.150%

Al is added as a deoxidizing agent; however, an Al content of less than 0.005% provides no effect. On the other hand, exceeding 0.150% Al lowers the cleanliness of the steel and deteriorates toughness. Thus, the Al content is limited to 0.005 to 0.150%.

### N: 0.006% or less

In the steel, N is present as an inevitable impurity. N refines crystal grains to enhance toughness by combining with Al to form AlN and, in the presence of Ti, by forming TiN. However, an N content exceeding 0.006% coarsens the nitrides, significantly decreasing toughness. Thus, the N content is 0.006% or less.

### Cr: more than 0.2% and 1.7% or less

Cr increases strength by enhancing hardenability and improves corrosion resistance. During tempering, Cr combines with C to form precipitates such as M₃C, M₇C₃, and M₂₃C₆ (where M is a metal element), thereby enhancing temper softening resistance. This is particularly necessary for increasing the strength of steel pipes. M₃C precipitates are especially effective in this regard. These effects require a Cr content of more than 0.2%. However, a Cr content exceeding 1.7% forms large amounts of M₇C₃ and M₂₃C₆, which act as hydrogen trapping sites and reduce hydrogen attack resistance. Furthermore, excessive Cr causes coarsening of molybdenum-containing precipitates. Since fine molybdenum-containing precipitates coarsen through aggregation and coalescence, the number density of the fine precipitates decreases, leading to lower hydrogen embrittlement resistance. Thus, the Cr content is limited to more than 0.2% and 1.7% or less. In some embodiments, the Cr content is more than 0.2% and 1.0% or less, such as more than 0.2% and 0.4% or less

### Mo: more than 1.0% and 3.0% or less

Mo forms precipitates and contributes to increasing the strength of the steel through precipitation strengthening, effectively ensuring high strength while reducing dislocation density during tempering. Furthermore, Mo is dissolved in the steel and segregates at prior austenite grain boundaries to contribute to enhancing hydrogen embrittlement resistance. Mo also densifies corrosion products and suppresses the generation and growth of pits that serve as crack origins. These effects require a Mo content of more than 1.0%. On the other hand, exceeding 3.0% Mo promotes the formation of acicular M₂C precipitates and, in some cases, Laves phase (Fe₂Mo), decreasing hydrogen embrittlement resistance. Thus, the Mo content is more than 1.0% and 3.0% or less. In some embodiments, the Mo content is more than 1.1% and 3.0% or less. In other embodiments, more than 1.2% and 2.8% or less, and such as 1.45 to 2.5%. Alternatively, the Mo content is 1.45 to 1.80%. Any amount within the range of more than 1.0% and 3.0% or less effectively disperses fine precipitates for trapping hydrogen.

### Nb: 0.001 to 0.02%

Nb contributes to increasing strength through precipitation strengthening by forming precipitates or carbonitrides and also refines austenite grains. These effects require an Nb content of 0.001% or more. On the other hand, coarse Nb precipitates can serve as crack origins for hydrogen-induced cracking. Exceeding 0.02% Nb significantly decreases hydrogen embrittlement resistance in high-strength steels. Thus, the Nb content is 0.001 to 0.02%. In some embodiments, the Nb content is 0.001% or more and less than 0.01%.

### B: 0.0003 to 0.0030%

B segregates at austenite grain boundaries and suppresses ferrite transformation, thereby enhancing hardenability even in minute amounts. This requires a B content of 0.0003% or more. On the other hand, exceeding 0.0030% B causes precipitation of carbonitrides, which decreases hardenability and toughness. Thus, the B content is 0.0003 to 0.0030%. In some embodiments, the B content is 0.0007 to 0.0025%.

### O (oxygen): 0.0030% or less

O is an inevitable impurity present as oxide inclusions. These inclusions serve as crack origins in hydrogen environments and decrease hydrogen embrittlement resistance; thus, the O content should be minimized. However, since excessive reduction increases costs, up to 0.0030% is acceptable. In some embodiments, the O content is 0.0020% or less.

### Ti: 0.003 to 0.025%

During solidification, Ti combines with N to precipitate as fine TiN, which refines austenite grains through a pinning effect. This requires a Ti content of 0.003% or more. Exceeding 0.025% Ti coarsens TiN, failing to provide the pinning effect and deteriorating toughness and hydrogen embrittlement resistance. Thus, the Ti content is 0.003 to 0.025%.

### Mo/C: more than 2.0 to 12.0

If the Mo/C ratio (the ratio of Mo content to C content) is less than 2.0, the lack of Mo reduces the formation of molybdenum-containing precipitates, making it impossible to form sufficient precipitates to enhance hydrogen embrittlement resistance. On the other hand, if the Mo/C ratio exceeds 12.0, the molybdenum-containing precipitates tend to coarsen significantly, deteriorating toughness and hydrogen embrittlement resistance. Furthermore, as coarsening also occurs through aggregation and coalescence, the number density of the fine precipitates decreases. Thus, the Mo/C ratio is limited to the range of 2.0 to 12.0. In some embodiments, the Mo/C ratio is 2.5 to 6.0.

The components described above are basic components. In addition to the basic components, the composition may optionally include one, or two or more selected from V: 0.3% or less, Cu: 1.0% or less, Ni: 2.0% or less, and W: 3.0% or less; H: 0.0010% or less; Ca: 0.0005 to 0.005%; or any combination thereof.

### One, or two or more selected from V: 0.3% or less, Cu: 1.0% or less, Ni: 2.0% or less, and W: 3.0% or less

V, Cu, Ni, and W are elements that contribute to increasing the strength of the steel. One, or two or more of these elements may be selectively included as necessary.

### V: 0.3% or less

V is an element that contributes to strengthening the steel by forming precipitates and carbonitrides. The V content may be 0% or more. Obtaining the above effects involves a V content of 0.02% or more, such as 0.03% or more. On the other hand, more than 0.3% V saturates the effects, failing to produce effects corresponding to the content, and is economically disadvantageous. Thus, when V is included, the V content is 0.3% or less. In some embodiments, the V content is 0.20% or less. In other embodiments, the V content is 0.15% or less.

### Cu: 1.0% or less

Cu is an element effective for improving toughness and increasing strength. However, excessive addition deteriorates weldability. Thus, when Cu is included, the Cu content is 1.0% or less. The Cu content may be 0% or more. Obtaining the effects of improving toughness and increasing strength involves a Cu content of 0.01% or more.

### Ni: 2.0% or less

Ni is an element that contributes to increasing the strength of the steel and enhances toughness and corrosion resistance. Obtaining these effects involves a Ni content of 0.03% or more. On the other hand, more than 2.0% Ni saturates the effects, failing to produce effects corresponding to the content, and is economically disadvantageous. Thus, when Ni is included, the Ni content is 2.0% or less.

### W: 3.0% or less

W is an element that contributes to increasing the strength of the steel through precipitation strengthening by forming precipitates, and is dissolved and segregates at prior austenite grain boundaries to contribute to enhancing hydrogen embrittlement resistance. Obtaining these effects involves a W content of 0.03% or more. On the other hand, more than 3.0% W saturates the effects, fails to produce effects corresponding to the content, and is economically disadvantageous. Thus, when W is included, the W content is 3.0% or less.

### H: 0.0010% or less

H may be introduced into the steel material in various manufacturing steps. Heavy introduction increases a risk of cracking after solidification and deteriorates hydrogen embrittlement resistance. It is therefore important to reduce the amount of hydrogen in the steel material. The introduction does not cause problems as long as the H content is 0.0010% or less. Thus, when H is included, the H content is 0.0010% or less. In other embodiments, the H content is 0.0001% or less. Since removing H to less than 0.00001% increases costs, the H content is 0.00001% or more in some embodiments. The amount of hydrogen is the amount of hydrogen remaining after forming a sheet, a steel pipe, or the like.

### Ca: 0.0005 to 0.005%

Ca is an element that combines with S to form CaS and effectively acts in controlling the shape of sulfide inclusions. Through the control of the shape of sulfide inclusions, Ca contributes to enhancing toughness and hydrogen embrittlement resistance. Obtaining these effects involves a Ca content of 0.0005% or more. On the other hand, more than 0.005% Ca saturates the effects, fails to produce effects corresponding to the content, and is economically disadvantageous. Thus, when Ca is included, the Ca content is 0.0005 to 0.005%.

The balance other than the components described above includes Fe and incidental impurities. As the incidental impurities, for example, Mg: 0.0008% or less and Co: 0.0008% or less are acceptable.

### [Manufacturing Method]

Next, a manufacturing method for the tank body 10 of the high-pressure tank 100 according to the first embodiment is described.

The tank body 10 is manufactured by heating a steel pipe material having the composition described above, hot-working the material, and processing the resulting seamless steel pipe into a predetermined shape. The seamless steel pipe for high-pressure hydrogen tanks may be applied to a hydrogen tank with an internal pressure of 1 MPa or more, such as 20 MPa or more.

The steel pipe material for manufacturing the tank body 10 (hereinafter also simply referred to as "the steel material") may be a billet (round billet) produced by smelting molten steel having the above-described composition in a conventional smelting method such as a converter, followed by a conventional casting method such as continuous casting. The billet may be further hot-rolled into a round bar or may be formed through ingot making and blooming.

In the following description, the manufacturing method is explained using an example in which the tank body 10 is a seamless tank. However, it goes without saying that the tank body 10 can also be manufactured by welding (e.g., an electric resistance welded (ERW) pipe), provided that processing is performed to achieve a similar thermal history. For example, similar characteristics can be obtained by: rolling a steel sheet at a temperature from the Ac3 transformation temperature to 1000°C; performing a quenching treatment by rapidly cooling the sheet to a surface temperature of 200°C or less at least once; and performing a tempering treatment by heating to 600 to 740°C with an average heating rate of 0.5°C/min or more and a holding time of 10 minutes or more and less than 60 minutes at the tempering temperature, followed by welding.

The tank body 10 can be manufactured by sequentially performing the following steps (1) to (3):
(1) a step of casting the steel material after adjusting its composition;
(2) a rolling step of heating and rolling the cast material to obtain a steel pipe; and
(3) a step of cooling and tempering the steel pipe obtained in the rolling step.
The respective steps are described below. Unless otherwise specified, the temperature in the following description refers to the temperature on the surface of the steel material.

### [Casting Step]

### Casting speed: 2.0 m/min or less

A lower casting speed reduces the hydrogen concentration and inclusions in the steel. This effect becomes significant at 2.0 m/min or less; therefore, the casting speed may be 1.5 m/min or less. In other embodiments, the casting speed is 1.0 m/min or less, such as 0.5 m/min or less.

### [Heating Step]

The steel material having the above composition is heated for hot rolling. Although the steel material is not particularly limited, for example, a billet obtained by a common continuous casting method can be used.

### Heating temperature: 1050 to 1350°C

If the heating temperature is less than 1050°C, the dissolution of precipitates in the steel material becomes insufficient. On the other hand, heating at over 1350°C coarsens the crystal grains and precipitates such as TiN formed during solidification, and also coarsens cementite, thereby reducing the toughness of the steel pipe. Furthermore, heating to a high temperature exceeding 1350°C generates a thick scale layer on the surface of the steel material, which causes surface defects during rolling and increases energy loss, which is undesirable from the viewpoint of energy saving. For these reasons, the heating temperature is limited to the range of 1050 to 1350°C. The heating temperature may be 1100 to 1300°C.

### [Rolling Step]

The heated steel material is rolled into a steel pipe shape. For rolling, hot rolling including piercing rolling by a conventional Mannesmann-plug mill method or a Mannesmann-mandrel mill method can be used.

After the completion of hot rolling, the obtained seamless steel pipe (the tank body 10) is subjected to a cooling process in which it is cooled to a surface temperature of 200°C or less at a cooling rate equal to or faster than air cooling.

### Cooling process after hot rolling: Cooling rate: air cooling or faster; Cooling stop temperature: 200°C or less

Within the composition range of the steel for the tank body 10, cooling at a rate equal to or faster than air cooling after hot rolling provides a microstructure with a martensite phase as the main phase. If the cooling is stopped at a surface temperature exceeding 200°C, the transformation may be incomplete. Thus, the cooling after hot rolling is performed until the surface temperature reaches 200°C or less. Here, "a cooling rate equal to or faster than air cooling" refers to 0.1°C/s or more. A cooling rate of less than 0.1°C/s results in a non-uniform metallic microstructure after cooling and after subsequent heat treatment.

### [Forming of Tank Body 10]

The shape of the tank body 10 may be formed during or after hot rolling. When the tank body 10 is a seamless, integrally formed product, it is formed by necking (drawing) both ends of the tubular rolled steel material. Any removal process required for the tank body 10 may be performed after hot rolling.

### [Heat Treatment Step]

After performing the cooling process (cooling at a rate equal to or faster than air cooling), a tempering treatment is performed. The tempering treatment involves heating to a temperature in the range of 600 to 740°C.

### Tempering temperature: 600 to 740°C

The tempering treatment is performed to reduce dislocation density, cause molybdenum-containing precipitates to form, and enhance toughness and hydrogen embrittlement resistance. If the tempering temperature is less than 600°C, the reduction of dislocations and the precipitation of the molybdenum-containing precipitates are insufficient, making it impossible to ensure excellent hydrogen embrittlement resistance. On the other hand, at a temperature exceeding 740°C, the structure softens significantly, failing to ensure the desired high strength. Thus, the tempering temperature is limited to 600 to 740°C, such as 640 to 710°C.

### Average heating rate until reaching tempering temperature: 0.5°C/min or more

Molybdenum-containing precipitates form during the heating process of tempering, and their size increases over time. Therefore, if the heating rate until reaching the predetermined temperature in the tempering treatment is too slow, the size of the precipitates becomes excessive, and the desired hydrogen embrittlement resistance cannot be obtained. Thus, the average heating rate until reaching the tempering temperature is 0.5°C/min or more, such as 2.0°C/min or more. While an upper limit is not particularly specified, a rate of 50°C/min or less may be used to avoid non-uniform temperature distribution and an inhomogeneous microstructure.

### Holding time at tempering temperature: 10 minutes or more and less than 120 minutes

The molybdenum-containing precipitates are most actively formed during the holding period at the tempering temperature. If this time is too short, sufficient precipitation does not occur, and the desired hydrogen embrittlement resistance cannot be obtained. Therefore, the holding time at the tempering temperature is at least 10 minutes. Conversely, if the holding time is too long, the precipitates coarsen excessively; thus, it is limited to less than 120 minutes. From the perspective of energy costs, the holding time may be less than 60 minutes.

To stably ensure the desired characteristics, it is preferable to perform reheating and quenching (rapid cooling by water cooling or the like) at least once after the initial cooling following hot rolling, followed by the tempering treatment described above.

### Reheating temperature for quenching: Ac3 transformation temperature to 1000°C

In the quenching treatment, if the reheating temperature is below the Ac3 transformation temperature, the steel is not heated to the austenite single-phase region, and thus a structure with martensite as the main phase cannot be obtained. On the other hand, if the temperature exceeds 1000°C, the crystal grains coarsen and toughness decreases, and the oxide scale on the surface thickens, which can lead to surface defects. Furthermore, it causes an excessive load on the heat treatment furnace and is problematic from the viewpoint of energy saving. Thus, the reheating temperature for quenching is limited to the range from the Ac3 transformation temperature to 1000°C, such as 950°C or less.

After reheating, the quenching may be performed by water cooling at an average cooling rate of 2°C/s or more at the center position of the thickness to a temperature of 400°C or less. Furthermore, the quenching rapidly cools the steel until the surface temperature reaches 200°C or less, such as 100°C or less. The quenching treatment may be repeated twice or more.

The Ac3 transformation temperature shall be a value calculated by the following formula:
$\begin{matrix}Ac 3 transformation temperature \left[°C\right] \\ = 937 - 476.5 C + 56 Si - 19.7 Mn - 16.3 Cu - 4.9 Cr - 26.6 Ni + 38.1 Mo \\ + 124.8 V + 136.3 Ti + 198 Al + 3315 B\end{matrix}$
(where C, Si, Mn, Cu, Cr, Ni, Mo, V, Ti, Al, and B represent the content of each element in mass%).
In calculating the Ac3 transformation temperature, if an element listed in the formula is not contained, its content shall be zero percent.

After the quenching and tempering treatments, a straightening process may be performed under warm or cold conditions to correct any shape defects of the tank body 10, if necessary. Alternatively, the tank body 10 may be formed after the quenching and tempering treatments.

### [Examples]

Hereinbelow, examples verifying the steel material constituting the tank body 10 will be described. The following description shows preferred examples of the steel material, and the present disclosure is not limited by these examples. In the following examples, characteristics were evaluated by manufacturing seamless steel pipes for actual steel structures rather than using an actually formed tank body 10. Regardless of whether the shape is a tank body 10 or a seamless steel pipe, the evaluation results for the steel types indicated as Inventive Examples in the remarks column of Table 3 are applicable, as only the final product shape differs. Table 2 shows the compositions of steel Nos. 1 to 14. Table 3 shows the tempering conditions, the size and amount of molybdenum-containing precipitates, and the relative reduction of area (RRA) for each of Nos. 1 to 14.

**[Table 2]**

| No. | Composition (mass%) | | | | | | | | | | | | | | Mo/C |
|---|---|---|---|---|---|---|---|---|---|---|---|---|---|---|---|
| | C | Si | Mn | P | S | Al | N | Cr | Mo | Nb | B | O | Ti | Others | |
| 1 | 0.20 | 0.20 | 0.69 | 0.010 | 0.003 | 0.008 | 0.003 | 1.10 | 1.1 | 0.006 | 0.0010 | 0.0010 | 0.010 | - | 5.5 |
| 2 | 0.20 | 0.22 | 0.70 | 0.010 | 0.003 | 0.008 | 0.003 | 0.80 | 2.4 | 0.006 | 0.0003 | 0.0010 | 0.010 | V 0.1, Cu 0.1, Ni 1.0, W 0.1 | 12.0 |
| 3 | 0.22 | 0.20 | 0.77 | 0.010 | 0.003 | 0.005 | 0.003 | 1.50 | 2.9 | 0.006 | 0.0010 | 0.0010 | 0.010 | - | 13.2 |
| 4 | 0.38 | 0.20 | 0.55 | 0.010 | 0.003 | 0.008 | 0.003 | 1.30 | 1.1 | 0.006 | 0.0010 | 0.0010 | 0.010 | - | 2.9 |
| 5 | 0.35 | 0.28 | 0.51 | 0.010 | 0.003 | 0.009 | 0.003 | 0.50 | 1.5 | 0.006 | 0.0010 | 0.0010 | 0.010 | - | 4.3 |
| 6 | 0.34 | 0.20 | 0.62 | 0.010 | 0.003 | 0.008 | 0.003 | 0.44 | 2.2 | 0.006 | 0.0010 | 0.0010 | 0.010 | - | 6.5 |
| 7 | 0.38 | 0.25 | 0.78 | 0.010 | 0.003 | 0.008 | 0.003 | 1.10 | 2.9 | 0.006 | 0.0010 | 0.0010 | 0.010 | - | 7.6 |
| 8 | 0.32 | 0.22 | 0.66 | 0.010 | 0.003 | 0.008 | 0.003 | 1.20 | 1.8 | 0.006 | 0.0010 | 0.0010 | 0.010 | Ni 0.2, H 0.0010, Ca 0.001 | 5.6 |
| 9 | 0.49 | 0.19 | 0.70 | 0.010 | 0.003 | 0.008 | 0.003 | 0.90 | 0.9 | 0.006 | 0.0010 | 0.0010 | 0.010 | - | 1.8 |
| 10 | 0.45 | 0.30 | 0.68 | 0.010 | 0.003 | 0.010 | 0.003 | 1.80 | 1.3 | 0.006 | 0.0010 | 0.0010 | 0.010 | - | 2.9 |
| 11 | 0.46 | 0.22 | 0.89 | 0.010 | 0.003 | 0.010 | 0.003 | 1.20 | 1.1 | 0.006 | 0.0010 | 0.0010 | 0.010 | - | 2.4 |
| 12 | 0.49 | 0.26 | 0.88 | 0.010 | 0.003 | 0.008 | 0.003 | 0.30 | 1.8 | 0.006 | 0.0010 | 0.0010 | 0.010 | - | 3.7 |
| 13 | 0.44 | 0.21 | 0.79 | 0.010 | 0.003 | 0.007 | 0.003 | 0.28 | 2.9 | 0.006 | 0.0010 | 0.0003 | 0.010 | - | 6.6 |
| 14 | 0.49 | 0.20 | 0.71 | 0.010 | 0.003 | 0.008 | 0.003 | 0.70 | 3.1 | 0.006 | 0.0010 | 0.0010 | 0.010 | - | 6.3 |

**[Table 3]**

| Steel material No. | Stee I type No | Temper ing process | | Preport on of molybdenum conta ned in prec pitates relative to the molybdenum conta ned in the steel | Proportion of molybdenum contained in precipitazes having a diameter of 50 nn or less relative to the mo ybdenum contained in precipitazes | TS | Tempered martensite area fraction | Relative reduction of area (RRA) | Remarks |
|---|---|---|---|---|---|---|---|---|---|
| | | Heating rate | Ho ding time | | | | | | |
| | | [°C/min] | [min] | wt.%/g | wt.%/g | MPa | % | % | |
| 1 | 1 | 0.5 | 30 | 70 | 66 | 914 | 95 | 68.9 | Inventive Example |
| 2 | 2 | 0.6 | 40 | 80 | 63 ' | 897 | 98 | 69.2 | Inventive Example |
| 3 | 3 | 0.5 | 30 | 75 | 38 | 931 | 95 | 41.3 | Comparative Example |
| 4 | 4 | 0.4 | 15 | 68 | *22* | 869 | 99 | 32.1 | Comparative Example |
| 5 | 5 | 0.5 | 55 | 72 | 59 | 893 | 97 | 75.3 | Inventive Example |
| 6 | 6 | 0.5 | 30 | 66 | 70 | 941 | 99 | 63.8 | Inventive Example |
| 7 | 7 | 0.5 | 120 | 75 | 34 | 938 | 95 | 31.5 | comparative Example |
| 8 | 8 | 6.7 | 55 | 88 | 75 | 927 | 97 | 73.2 | Inventive Example |
| 9 | 9 | 0.6 | 40 | 54 | 66 | 897 | 99 | 35.0 | Comparative Example |
| 10 | 10 | 0.5 | *20* | 71 | 41 | 869 | 97 | 51.8 | Comparative Example |
| 11 | 11 | 0.5 | 5 | 28 | 88 | 916 | 98 | 30.0 | Comparative Example |
| 12 | 12 | 0.5 | 10 | 89 | 66 | 872 | 98 | 70.8 | Inventive Example |
| 13 | 13 | 0.7 | 40 | 74 | 62 | 944 | 96 | 66.9 | Inventive Example |
| 14 | 14 | 0.5 | 45 | 79 | 39 | 925 | 99 | 47.8 | Comparative Example |
| 15 | 5 | 0.5 | 30 | 70 | 58 | 904 | 98 | 74.3 | Inventive Example |
| 15 | 5 | 0.5 | 10 | 66 | 55 | 950 | 99 | 70.1 | Inventive Example |
| 17 | 5 | 0.5 | 30 | 62 | 52 | 1065 | 99 | 65.6 | Inventive Example |
| 18 | 5 | 0.5 | 60 | 52 | 45 | 1147 | 98 | 61.2 | Inventive Example |

Billets having the compositions of steel Nos. 1 to 14 shown in Table 2 were produced at a casting speed of 0.6 m/min. These billets were heated to 1250°C and expanded to obtain seamless steel pipes. These pipes correspond to steel Nos. 1 to 14 in Table 3. Additionally, a billet having the composition of steel No. 5 in Table 2 was produced at a casting speed of 1.8 m/min, heated to 1250°C, and expanded into seamless steel pipes, corresponding to steel Nos. 15 to 17 in Table 3. For all pipes (Nos. 1 to 18), the expansion process was completed at 820°C or higher, followed by cooling to a surface temperature of 200°C or less at a rate equal to or faster than air cooling. Seamless steel pipes with an Ac3 temperature of 950°C or lower were reheated and held at 950°C, while those with an Ac3 temperature above 950°C were held at 1000°C. After holding, the pipes were water-cooled to 200°C or less at a rate of 0.5°C/min and then tempered. The tempering treatment was performed using the heating rates and holding times shown in Table 3. The tempering temperature was adjusted to achieve a tensile strength within the range of 850 to 1150 MPa. The microstructure and mechanical properties of the resulting pipes were then evaluated. The evaluation methods are as follows.

Hydrogen embrittlement resistance was evaluated based on the relative reduction of area (RRA) of test pieces after a slow strain rate tensile (SSRT) test in hydrogen gas. In air, the steel undergoes plastic deformation, causing the fracture surface area to decrease and the reduction of area (phi-air) to increase. In hydrogen, however, the elongation decreases, causing the material to fracture before significant necking occurs, which leaves a larger fracture surface area. Thus, the reduction of area after testing in hydrogen (phi-H) is smaller than that in air. The RRA is calculated as: RRA = (phi-H / phi-air) x 100. Table 3 shows the RRA values obtained from SSRT tests at room temperature under 105 MPa hydrogen gas (tensile rate: 0.002 mm/s). A larger RRA indicates superior hydrogen embrittlement resistance; in this evaluation, a value of 60% or more was considered good.

The molybdenum-containing precipitates were measured using an extraction method. A 10 mm square sample was taken from a cross-section perpendicular to the pipe axis (C cross section). The sample was dissolved via constant current electrolysis in a 10% AA-based electrolytic solution. The precipitates were then extracted into a 0.05 wt% sodium hexametaphosphate aqueous solution using ultrasonic irradiation. The solution was filtered through a 50 nm filter to collect precipitates of 50 nm or less. Both the fine precipitates (50 nm or less) and the larger ones (exceeding 50 nm) were treated with sulfuric, perchloric, and nitric acids to produce white fumes, then dissolved in hydrochloric acid. Finally, the Mo concentration, Mo amount, and solid-solution Mo concentration were calculated using ICP analysis of the resulting solutions.

All steel types indicated as Inventive Examples in Table 3 satisfied the criterion of an RRA of 60% or more in the SSRT test in hydrogen gas.

The configurations shown in the above embodiments are merely examples, and parts of the configurations may be omitted or modified without departing from the scope of the invention.

The high-pressure tank 100 described above may also include combinations of the features described in Supplementary Notes 1 to 13 below. These combinations are as follows:

### [Supplementary Note 1]

A high-pressure tank comprising:
a tank body for storing therein a mixed gas containing natural gas and hydrogen, the mixed gas containing more than 2% hydrogen by volume,
the tank body comprising: a cylindrical portion extending in a first direction; and dome portions respectively provided at both ends of the cylindrical portion in the first direction, wherein a steel material constituting the tank body has: a tensile strength (TS) of 850 MPa or more; a structure in which tempered martensite accounts for 95% or more in terms of area fraction, and carbides having a size of 100 nm or less are dispersed in a metallic microstructure as precipitates; and strength of 11,250 cycles or more in crack propagation analysis.

### [Supplementary Note 2]

The high-pressure tank according to supplementary note 1, wherein the tank body satisfies a condition of 255 MPa < σ ≤ 445 MPa, wherein a maximum circumferential stress σ generated in the cylindrical portion when the mixed gas containing hydrogen at p = 25 MPa is stored in the tank body is defined as σ = Di·p/(2t).

### [Supplementary Note 3]

The high-pressure tank according to supplementary note 1 or 2, wherein a wall thickness t of the cylindrical portion satisfies 8 mm ≤ t.

### [Supplementary Note 4]

The high-pressure tank according to any one of supplementary notes 1 to 3, wherein the cylindrical portion and the dome portions are integrally formed.

### [Supplementary Note 5]

The high-pressure tank according to any one of supplementary notes 1 to 4,
wherein the carbides dispersed in the metallic microstructure as precipitates include molybdenum-containing precipitates, and
50% or more of Mo contained in the steel material is present in the molybdenum-containing precipitates.

### [Supplementary Note 6]

The high-pressure tank according to supplementary note 5, wherein 50% or more of the Mo contained in the molybdenum-containing precipitates is present in precipitates having a diameter of 50 nm or less.

### [Supplementary Note 7]

The high-pressure tank according to supplementary note 5 or 6, wherein the steel material contains, in mass%, more than 1.0% and 3.0% or less of Mo.

### [Supplementary Note 8]

The high-pressure tank according to any one of supplementary notes 5 to 7, wherein the steel material contains Mo and C such that Mo/C, which is a ratio of the Mo content to the C content, is in a range of 2.0 to 12.0.

### [Supplementary Note 9]

The high-pressure tank according to supplementary note 8, wherein the steel material contains, in mass%, 0.20 to 0.50% of C.

### [Supplementary Note 10]

The high-pressure tank according to supplementary note 9, wherein the steel material constituting the tank body has a composition comprising, in mass%:
0.05 to 2.00% of Si;
0.30 to 1.5% of Mn;
0.015% or less of P;
0.005% or less of S;
0.005 to 0.15% of Al;
0.006% or less of N;
more than 0.2% and 1.7% or less of Cr;
0.001 to 0.02% of Nb;
0.0003 to 0.0030% of B;
0.0030% or less of O; and
0.003 to 0.025% of Ti,
with the balance being Fe and incidental impurities.

### [Supplementary Note 11]

The high-pressure tank according to supplementary note 10, wherein the steel material constituting the tank body further contains, in mass%, one or more selected from the group consisting of:
0.3% or less of V;
1.0% or less of Cu;
2.0% or less of Ni; and
3.0% or less of W.

### [Supplementary Note 12]

The high-pressure tank according to supplementary note 10 or 11, wherein the steel material constituting the tank body further contains, in mass%, 0.0010% or less of H.

### [Supplementary Note 13]

The high-pressure tank according to any one of supplementary notes 10 to 12, wherein the steel material constituting the tank body further contains, in mass%, 0.0005 to 0.005% of Ca

### Reference Signs List

10: Tank body 11: Cylindrical portion 12: Dome portion 12a: Dome portion 12b: Dome portion 13: Mouthpiece 14: Supply device 90: Internal space 100: High-pressure tank

## Claims

1. A high-pressure tank comprising:
a tank body for storing therein a mixed gas containing natural gas and hydrogen, the mixed gas containing more than 2% hydrogen by volume,
the tank body comprising:
a cylindrical portion extending in a first direction; and
dome portions respectively provided at both ends of the cylindrical portion in the first direction,
wherein a steel material constituting the tank body has:
a tensile strength (TS) of 850 MPa or more;
a structure in which tempered martensite accounts for 95% or more in terms of area fraction, and carbides having a size of 100 nm or less are dispersed in a metallic microstructure as precipitates; and
strength of 11,250 cycles or more in crack propagation analysis.

2. The high-pressure tank according to claim 1,
wherein the tank body satisfies a condition of 255 MPa < σ ≤ 445 MPa, wherein a maximum circumferential stress σ generated in the cylindrical portion when the mixed gas containing hydrogen at p = 25 MPa is stored in the tank body is defined as σ = Di·p/(2t).

3. The high-pressure tank according to claim 1 or 2,
wherein a wall thickness t of the cylindrical portion satisfies 8 mm ≤ t.

4. The high-pressure tank according to any one of claims 1 to 3,
wherein the cylindrical portion and the dome portions are integrally formed.

5. The high-pressure tank according to any one of claims 1 to 4,
wherein the carbides dispersed in the metallic microstructure as precipitates include molybdenum-containing precipitates, and
50% or more of Mo contained in the steel material is present in the molybdenum-containing precipitates.

6. The high-pressure tank according to claim 5,
wherein 50% or more of the Mo contained in the molybdenum-containing precipitates is present in precipitates having a diameter of 50 nm or less.

7. The high-pressure tank according to claim 5 or 6,
wherein the steel material contains, in mass%, more than 1.0% and 3.0% or less of Mo.

8. The high-pressure tank according to any one of claims 5 to 7,
wherein the steel material contains Mo and C such that Mo/C, which is a ratio of the Mo content to the C content, is in a range of 2.0 to 12.0.

9. The high-pressure tank according to claim 8,
wherein the steel material contains, in mass%, 0.20 to 0.50% of C.

10. The high-pressure tank according to claim 9,
wherein the steel material constituting the tank body has a composition comprising, in mass%:
0.05 to 2.00% of Si;
0.30 to 1.5% of Mn;
0.015% or less of P;
0.005% or less of S;
0.005 to 0.15% of Al;
0.006% or less of N;
more than 0.2% and 1.7% or less of Cr;
0.001 to 0.02% of Nb;
0.0003 to 0.0030% of B;
0.0030% or less of O; and
0.003 to 0.025% of Ti,
with the balance being Fe and incidental impurities.

11. The high-pressure tank according to claim 10,
wherein the steel material constituting the tank body further contains, in mass%, one or more selected from the group consisting of:
0.3% or less of V;
1.0% or less of Cu;
2.0% or less of Ni; and
3.0% or less of W.

12. The high-pressure tank according to claim 10 or 11,
wherein the steel material constituting the tank body further contains, in mass%, 0.0010% or less of H.

13. The high-pressure tank according to any one of claims 10 to 12,
wherein the steel material constituting the tank body further contains, in mass%, 0.0005 to 0.005% of Ca.
